(19) **Europäisches Patentamt**
**European Patent Office**
**Office européen des brevets**

(11) **EP 3 312 529 B1**

(12) **EUROPEAN PATENT SPECIFICATION**

(45) Date of publication and mention
of the grant of the patent:
**29.01.2020 Bulletin 2020/05**

(21) Application number: **16811768.7**

(22) Date of filing: **17.06.2016**

(51) Int Cl.:
*F25B 21/00* (2006.01)    *F25B 41/04* (2006.01)

(86) International application number:
**PCT/JP2016/068184**

(87) International publication number:
**WO 2016/204294 (22.12.2016 Gazette 2016/51)**

(54) **HEAT EXCHANGER, MAGNETIC HEAT-PUMP DEVICE, AND METHOD FOR MANUFACTURING HEAT EXCHANGER**

WÄRMETAUSCHER, MAGNETISCHE WÄRMEPUMPENVORRICHTUNG UND VERFAHREN ZUR HERSTELLUNG DES WÄRMETAUSCHERS

ÉCHANGEUR THERMIQUE, DISPOSITIF DE POMPE À CHALEUR MAGNÉTIQUE ET PROCÉDÉ DE FABRICATION D'ÉCHANGEUR THERMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.06.2015 JP 2015123628**
**09.10.2015 JP 2015200867**

(43) Date of publication of application:
**25.04.2018 Bulletin 2018/17**

(73) Proprietor: **Fujikura Ltd.**
**Tokyo 135-8512 (JP)**

(72) Inventors:
• **KONDO, Masahiro**
**Sakura-shi**
**Chiba 285-8550 (JP)**

• **ISHIKAWA, Kohki**
**Sakura-shi**
**Chiba 285-8550 (JP)**
• **UENO, Kota**
**Sakura-shi**
**Chiba 285-8550 (JP)**

(74) Representative: **Ter Meer Steinmeister & Partner Patentanwälte mbB**
**Artur-Ladebeck-Strasse 51**
**33617 Bielefeld (DE)**

(56) References cited:
**EP-A1- 2 833 085      JP-A- 2013 064 588**
**JP-A- 2013 064 588      JP-B2- 5 734 991**
**US-A1- 2005 047 284      US-A1- 2012 049 103**

EP 3 312 529 B1

**Description**

TECHNICAL FIELD

The present invention relates to a heat exchanger to be used in a magnetic heat pump device using a magnetocaloric effect, a magnetic heat pump device including the heat exchanger, and a manufacturing method of the heat exchanger.

BACKGROUND ART

There is known a heat exchanger according to preamble of claim 1 including: an assembly obtained by overlapping a plurality of columnar magnetic bodies in a direction intersecting its longitudinal direction; and a cylindrical casing having the assembly inserted thereinto (for example, see Patent Document 1).

CITATION LIST

PATENT DOCUMENT

Patent Document 1: JP 2013-64588 A

SUMMARY OF THE INVENTION

PROBLEM TO BE SOLVED BY THE INVENTION

In the above-described heat exchanger, a gap is formed between a magnetic bodies located at the outermost periphery of the assembly and the inner peripheral surface of the casing. For that reason, since a large amount of a liquid medium flows into the gap and the amount of the liquid medium passing through a passage formed between the magnetic bodies is small, a problem arises in that a heat exchange efficiency is not high.

Problems to be solved by the present invention include providing a heat exchanger capable of improving a heat exchange efficiency, a magnetic heat pump device including the heat exchanger, and a manufacturing method of the heat exchanger.

MEANS FOR SOLVING PROBLEM

According to the invention, a heat exchanger according to claim 1 and a manufacturing method according to claim 9 are disclosed.

[1] A heat exchanger according to the invention is a heat exchanger to be used in a magnetic heat pump device, the heat exchanger comprising: an assembly formed by bundling wires; and a cover layer covering the assembly, wherein each of the wires is composed of a magnetocaloric material having a magnetocaloric effect, and the cover layer includes: a tubular portion surrounding the periphery of the assembly; and a filling portion filling a gap between the outer periphery of the assembly and the tubular portion.

[2] In the above-described invention, the tubular portion and the filling portion may be integrally formed.

[3] In the above-described invention, the cover layer may be composed of polyvinyl chloride, polyethylene, crosslinked polyethylene, silicone rubber, or fluororesin.

[4] In the above-described invention, the cover layer may include: a first opening located at one end; and a second opening located at the other end, and a direction from the first opening to the second opening may substantially match an extending direction of the assembly.

[5] In the above-described invention, the assembly may be formed by twisting the wires.

[6] In the above-described invention, the wires may be twisted by concentric twisting, collective twisting, or composite twisting.

[7] In the above-described invention, following Equations (1) and (2) may be satisfied.

$$1.4 \times 10 \leq A \leq 2.25 \times 10^4 \ \ldots \ (1)$$

$$A = P/R \ldots (2)$$

In the above Equation (2), P is a twisting pitch of twisting the wires, and R is a wire diameter of the wire.

[8] A magnetic heat pump device according to the invention is a magnetic heat pump device comprising: at least one of the above-described heat exchangers; a magnetic field changer configured to apply a magnetic field to the magnetocaloric material and change the magnitude of the magnetic field; first and second external heat exchangers respectively connected to the heat exchanger through a pipe; and a fluid supplier configured to supply a fluid from the heat exchanger to the first or second external heat exchanger in synchronization with the operation of the magnetic field changer.

[9] A manufacturing method of the heat exchanger according to the invention is a manufacturing method of a heat exchanger to be used in a magnetic heat pump device, the manufacturing method comprising: a first step of forming an assembly by bundling wires; and a second step of forming a cover layer to cover the assembly, wherein each of the wires is composed of a magnetocaloric material having a magnetocaloric effect, and the cover layer includes: a tubular portion surrounding the periphery of the assembly; and a filling portion filling a gap between the outer periphery of the assembly and the tubular portion.

[10] In the above-described invention, the second step may include forming the cover layer by extruding a resin material to the outer periphery of the assembly while moving the assembly.

[11] In the above-described invention, the first step may include forming the assembly by twisting the wires.

[12] In the above-described invention, the manufacturing method may comprise a third step of cutting the assembly covered by the cover layer into a predetermined length.

EFFECT OF THE INVENTION

According to the invention, since a gap between the assembly and the tubular portion is blocked by the filling portion of the cover layer, a large amount of the liquid medium can pass through the passage formed between the wires of the assembly and thus a heat exchange efficiency can be improved.

BRIEF DESCRIPTION OF DRAWINGS

Fig. 1 is a diagram showing an overall configuration of a magnetic heat pump device in an embodiment of the invention and is a diagram showing a state where a piston is located at a first position;

Fig. 2 is a diagram showing an overall configuration of the magnetic heat pump device in the embodiment of the invention and is a diagram showing a state where the piston is located at a second position;

Fig. 3 is a cross-sectional view of an MCM heat exchanger in the embodiment of the invention and is a cross-sectional view cut along a liquid medium flow direction;

Fig. 4 is a cross-sectional view taken along a line IV-IV of Fig. 3;

Fig. 5 is an exploded perspective view showing another configuration of the MCM heat exchanger in the embodiment of the invention;

Fig. 6 is a cross-sectional view taken along a line VI-VI of Fig. 5;

Fig. 7(a) is a side view of an assembly used in the MCM heat exchanger shown in Fig. 5, and Fig. 7(b) is a side view of one of wires constituting the assembly shown in Fig. 7(a);

Fig. 8 is a process diagram showing a manufacturing method of an MCM heat exchanger in the embodiment of the invention;

Fig. 9 is a cross-sectional view of a resin extrusion covering device used in step S20 of Fig. 8; and

Fig. 10 is a cross-sectional view showing a twisting device and a resin extrusion covering device used at the time of manufacturing the MCM heat exchanger shown in Fig. 5.

MODE(S) FOR CARRYING OUT THE INVENTION

Hereinafter, an embodiment of the invention will be described with reference to the drawings.

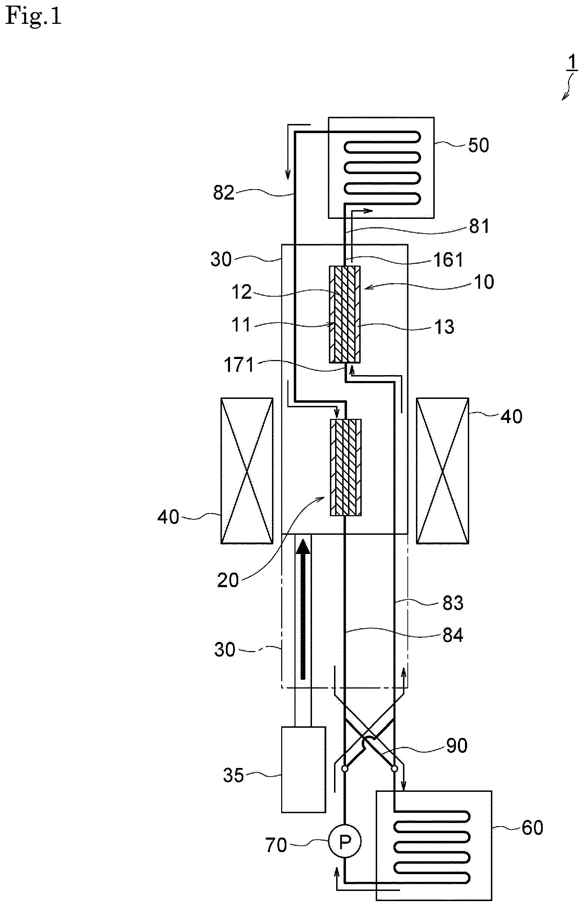

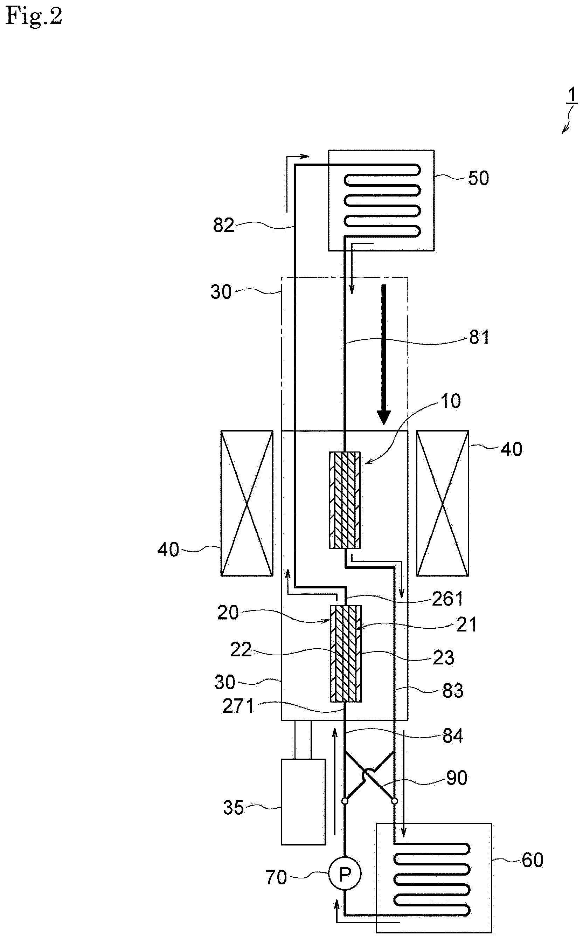

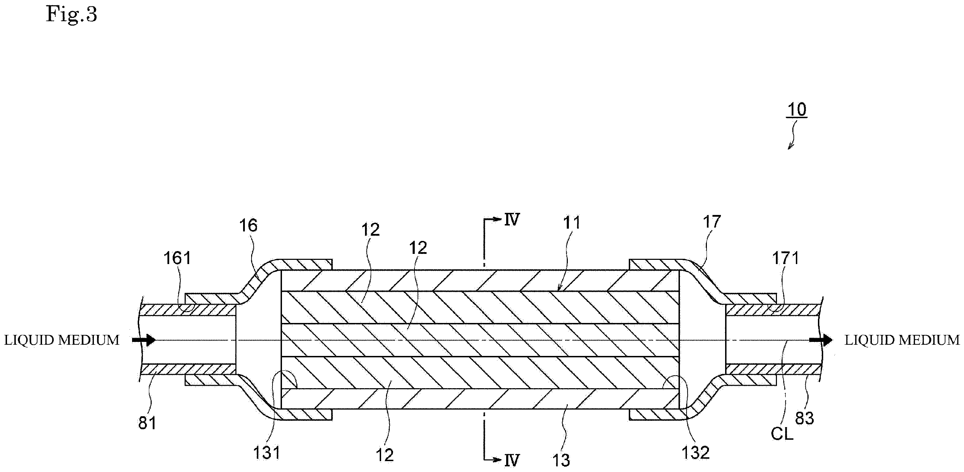

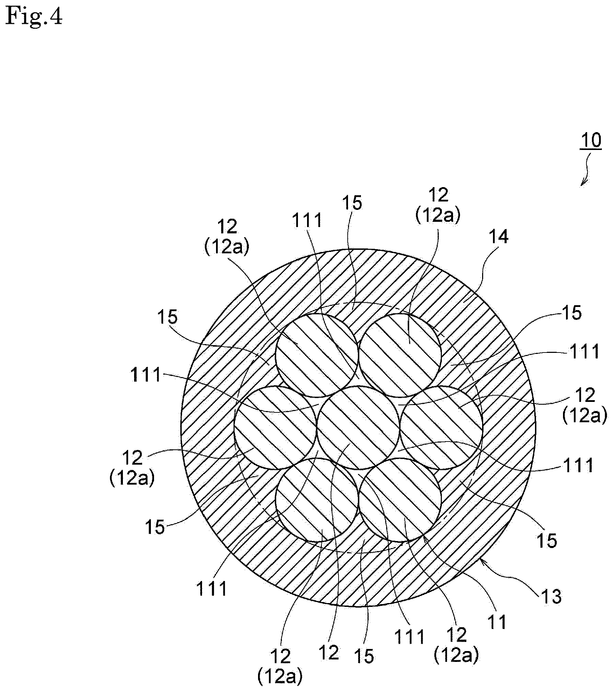

Figs. 1 and 2 are diagrams showing an overall configuration of a magnetic heat pump device of this embodiment, and Figs. 3 and 4 are diagrams showing an MCM heat exchanger of this embodiment.

A magnetic heat pump device 1 of this embodiment is a heat pump device using a magnetocaloric effect and includes, as shown in Figs. 1 and 2, first and second MCM heat exchangers 10 and 20, a piston 30, a permanent magnet 40, a low temperature side heat exchanger 50, a high temperature side heat exchanger 60, a pump 70, pipes 81 to 84, and a switching valve 90.

The first and second MCM heat exchangers 10 and 20 of this embodiment correspond to an example of the heat exchanger of the invention, the piston 30 and the permanent magnet 40 of this embodiment correspond to an example of a magnetic changer of the invention, the low temperature side heat exchanger 50 and the high temperature side heat exchanger 60 correspond to an example of first and second external heat exchangers of the invention, the pipes 81 to 84 of this embodiment correspond to an example of a pipe of the invention, and the pump 70 and the switching valve 90 of this embodiment correspond to an example of a fluid supplier of the invention.

The first MCM heat exchanger 10 includes, as shown in Figs. 3 and 4, an assembly (an aggregate) 11 including a plurality of wires 12, a cover layer 13 covering the assembly 11, and adapters 16 and 17 connected to both ends of the cover layer 13. Since the first MCM heat exchanger 10 and the second MCM heat exchanger 20 have the same structure, a configuration of the first MCM heat exchanger 10 will be described only below, and a configuration of the second MCM heat exchanger 20 will be omitted.

The wire 12 is composed of a magnetocaloric material (MCM) having a magnetocaloric effect. When a magnetic field is applied to the wire 12 composed of the MCM, the electron spins are aligned. Accordingly, the magnetic entropy decreases, and the wire 12 generates heat so that its temperature rises. Meanwhile, when the magnetic field is removed from the wire 12, the electron spins become disordered. Accordingly, the magnetic entropy increases, and the wire 12 absorbs heat as its temperature falls.

The MCM of which the wire 12 is composed not particularly limited as long as the MCM is a magnetic body. However, for example, a magnetic body having a Curie temperature (Curie point) in a normal temperature range of about 10°C to 30°C and exhibiting a high magnetocaloric effect in a normal temperature range is desirable. Specific examples of such MCMs include gadolinium (Gd), gadolinium alloy, lanthanum-iron-silicon (La-Fe-Si) based compounds, and the like.

The wire 12 of this embodiment is a wire member having a circular cross-sectional shape. As long as it is possible to form a passage 111 (to be described later) between the wires 12 at the time of bundling the wires 12, the wire 12 may have a cross-sectional shape other than the circular cross-sectional shape.

The assembly 11 is formed by bundling the plurality of wires 12. The plurality of wires 12 are bundled (overlapped) in a direction intersecting the longitudinal direction of the wire 12. In other words, the plurality of wires 12 are adjacent to each other so that the side surfaces of the wires 12 contact each other. As a result, the passage 111 is formed between the side surfaces of the wires 12. In order to facilitate understanding, the assembly 11 includes seven wires 12 in the example shown in Fig. 4, but in fact, the assembly 11 is formed by bundling thousands to tens of thousands of the wires 12.

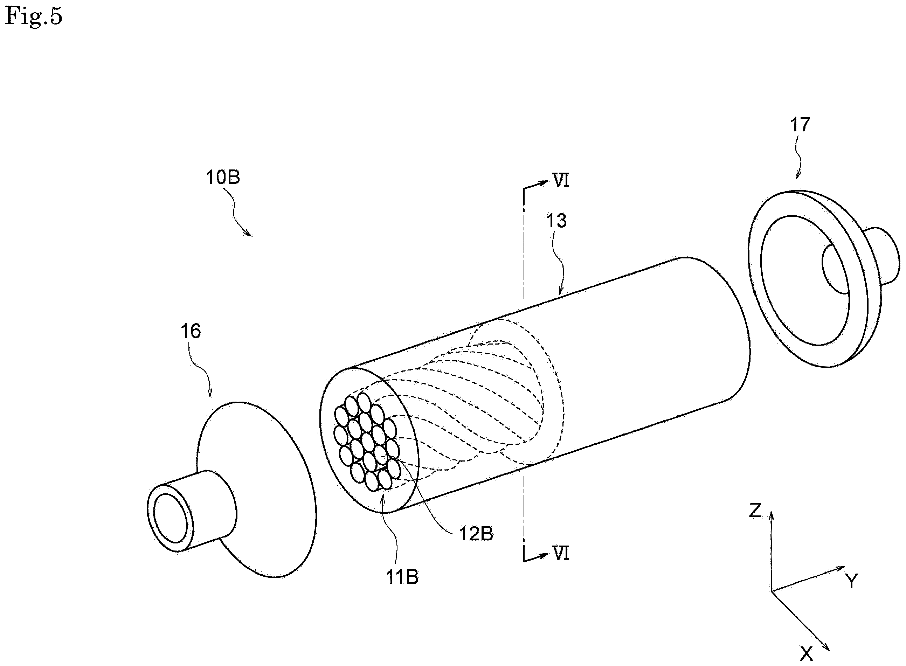

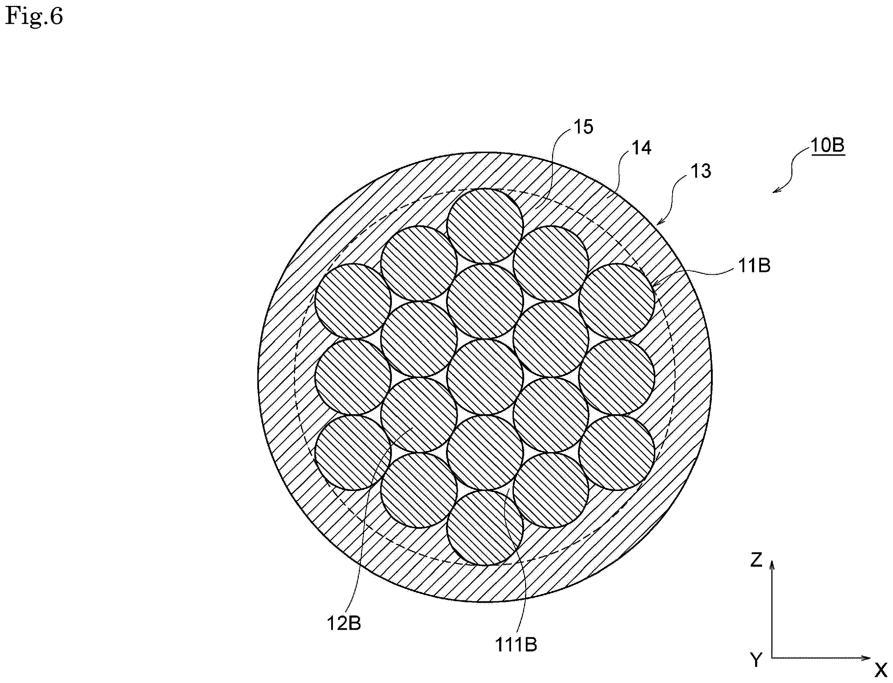

The assembly 11 shown in Figs. 3 and 4 is formed by simply bundling the plurality of wires 12, but the configuration of the assembly is not particularly limited thereto. For example, instead of the assembly 11, an assembly 11B may be formed by twisting a plurality of wires 12B as in an MCM heat exchanger 10B shown in Figs. 5 and 6.

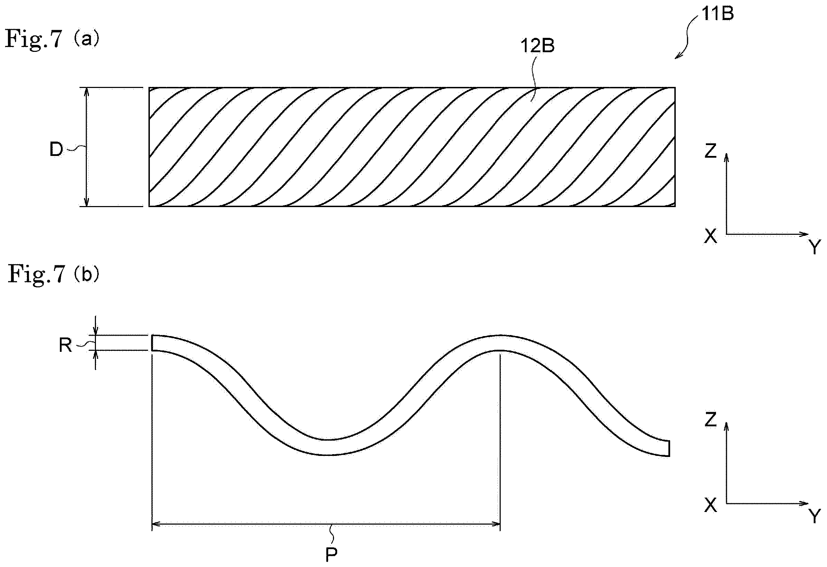

Fig. 5 is an exploded perspective view showing another configuration of the MCM heat exchanger of this embodiment, Fig. 6 is a cross-sectional view taken along a line VI-VI of Fig. 5, Fig. 7(a) is a side view of the assembly used in the MCM heat exchanger shown in Fig. 5, and Fig. 7(b) is a side view of one of wires constituting the assembly shown in Fig. 7(a).

Specifically, the assembly 11B shown in Figs. 5 and 6 is formed by bundling the plurality of wires 12B in a direction intersecting the longitudinal direction and twisting (stranding) them together. Since the side surfaces of the adjacent twisted wires 12B contact each other, a passage 111B is formed therebetween. In order to facilitate understanding, the assembly 11B includes nineteen wires 12B in the examples shown in Figs. 5 and 6, but in fact, the assembly 11B is formed by bundling several hundreds to several tens of thousands of the wires 12B. An outer diameter D (see Fig. 7(a)) of the assembly 11B is not particularly limited, but for example, 30 mm or less is desirable from the viewpoint of ensuring the magnetic flux density.

In the assembly 11B shown in Figs. 5 and 6, the plurality of wires 12B are twisted by collective twisting. A method of twisting the plurality of wires 12B of the assembly 11B is not particularly limited, and concentric twisting or composite twisting may be used. The collective twisting is a twisting method in which the plurality of wires 12B are bundled together and twisted in the same direction around the axis of the assembly 11B. The concentric twisting is a twisting method in which the plurality of wires 12B are concentrically twisted around a core wire corresponding to a center. The composite twisting is a twisting method in which child twisted wires each of which is obtained by twisting the plurality of wires 12B by concentric twisting or collective twisting are further twisted by concentric twisting or collective twisting. The core wire of concentric twisting may be formed as one wire 12B or may be formed by twisting the plurality of wires 12B. Further, a direction of twisting the plurality of wires 12B may be a right direction or a left direction.

The wire diameter R of the wire 12B (see Fig. 7(b)) is not particularly limited, but for example, 0.01 to 1 mm is desirable and 0.02 to 0.5 mm is more desirable. At this time, the plurality of wires 12B constituting the assembly 11B may have the substantially same wire diameters or may have different wire diameters. Further, when the wire diameter of the wire 12B is set within the above-described range, the twisting pitch P (see Fig. 7(b)) for twisting the wires 12B is desirably 14 to 450 mm. When the twisting pitch P is smaller than the lower limit value, there is a concern that the passage may be crushed since the wires are compressed and deformed. Meanwhile, when the twisting pitch P is larger than the upper limit value, there is a concern that the wires cannot be held by each other since the twisting is broken. In the present specification, the "twisting pitch" is the length of the wire 12B in the longitudinal direction while one wire 12B goes one revolution around the assembly 11B.

Further, in this embodiment, a relation between the twisting pitch P and the wire diameter R of the wire 12B is desirably set to satisfy Equations (3) and (4) as below.

$$1.4 \times 10 \le A \le 2.25 \times 10^4 \ ... \ (3)$$

$$A = P/R \ ... \ (4)$$

Returning to Figs. 3 and 4, the assembly 11 of the wire 12 is covered (coated) by the cover layer 13. The cover layer 13 includes a tubular portion 14 and a filling portion 15. The tubular portion 14 surrounds the periphery of the assembly 11 in a cylindrical shape. Meanwhile, the filling portion 15 is charged to fill a gap between the outer periphery of the assembly 11 and the inner periphery of the tubular portion 14. That is, in this embodiment, the filling portion 15 fills between the wires 12a located at the outermost periphery of the assembly 11 and the tubular portion 14 so as to block a gap between the outermost wires 12a and the tubular portion 14. The cover layer 13 is composed of, for example, a resin material such as polyvinyl chloride, polyethylene, crosslinked polyethylene, silicone rubber, and fluororesin, and the tubular portion 14 and the filling portion 15 are integrally formed. The "integral formation" of this embodiment means that the members are not separated, but are formed as an integral structure by the same resin material. Even when the assembly 11B formed by twisting the plurality of wires 12B is used instead of the assembly 11, the assembly 11B is covered by the cover layer 13 including the tubular portion 14 and the filling portion 15, and the filling portion 15 fills between the outer periphery of the assembly 11B and the tubular portion 14 (see Fig. 6).

Further, as shown in Figs. 3 and 4, the cover layer 13 includes: a first opening 131 located at one end; and a second opening 132 located at the other end. A direction CL from the first opening 131 to the second opening 132 substantially matches the extending direction of the assembly 11. Further, the first adapter 16 is connected to one end of the cover layer 13. Similarly, the second adapter 17 is also connected to the other end of the cover layer 13.

As specified examples of the first and second adapters 16 and 17, for example, a heat shrinkable tube or the like can be exemplified. The first and second adapters 16 and 17 may be formed as resin products, or the first and second adapters 16 and 17 may be composed of a metal material.

The first adapter 16 includes a first connection port 161 smaller than the first opening 131. As shown in Fig. 1, the first connection port 161 communicates with the low temperature side heat exchanger 50 through the first low temperature side pipe 81. The second adapter 17 also includes a second connection port 171 smaller than the second opening 132. The second connection port 171 communicates with the high temperature side heat exchanger 60 through the first high temperature side pipe 83. The centers of the first and second connection ports 161 and 171 are located to be coaxial with the center of the assembly 11.

Similarly, the cover layer 23 of the second MCM heat exchanger 20 also covers the assembly 21 including the plurality of wires 22, and the first and second adapters are connected to both ends of the cover layer 23. As shown in Fig. 2, the first connection port 261 of the first adapter communicates with the low temperature side heat exchanger 50 through the second low temperature side pipe 82. Meanwhile, the second connection port 271 of the second adapter communicates with the high temperature side heat exchanger 60 through the second high temperature side pipe 84.

The wire 22 of the second MCM heat exchanger 20 has the same configuration as that of the wire 12 of the first MCM heat exchanger 10. Further, the cover layer 23 of the second MCM heat exchanger 20 also has the same configuration as that of the cover layer 13 of the first MCM heat exchanger 10. Further, the adapters of the second MCM heat exchanger 20 also have the same configurations as those of the adapters 16 and 17 of the first MCM heat exchanger 10.

For example, in a case where an air conditioner using the magnetic heat pump device 1 of this embodiment is operated in a cooling mode, an indoor place is cooled by a heat exchange between the low temperature side heat exchanger 50 and the inside air, and heat is emitted to an outdoor place by a heat exchange between the high temperature side heat exchanger 60 and the outside air.

On the contrary, in a case where the air conditioner is operated in a warming mode, the indoor place is warmed by a heat exchange between the high temperature side heat exchanger 60 and the inside air, and heat is absorbed from the outdoor place by a heat exchange between the low temperature side heat exchanger 50 and the outside air.

As described above, a circulation path including four heat exchangers 10, 20, 50, and 60 is formed by two low temperature side pipes 81 and 82 and two high temperature side pipes 83 and 84, and a liquid medium is pressure-fed in the circulation path by the pump 70. As a specified example of the liquid medium, for example, a liquid such as water, an antifreeze solution, an ethanol solution, or a mixture thereof can be exemplified. The liquid medium of this embodiment corresponds to an example of a fluid of the invention.

Two MCM heat exchangers 10 and 20 are accommodated inside the piston 30. The piston 30 can move in a reciprocating manner between a pair of permanent magnets 40 by the actuator 35. Specifically, the piston 30 can move in a reciprocating manner between a "first position" shown in Fig. 1 and a "second position" shown in Fig. 2. As an example of the actuator 35, for example, an air cylinder or the like can be exemplified.

Here, the "first position" is a position of the piston 30 when the first MCM heat exchanger 10 is not interposed between the permanent magnets 40 and the second MCM heat exchanger 20 is interposed between the permanent magnets 40. On the contrary, the "second position" is a position of the piston 30 when the first MCM heat exchanger 10 is interposed between the permanent magnets 40 and the second MCM heat exchanger 20 is not interposed between the permanent magnets 40.

Instead of the first and second MCM heat exchangers 10 and 20, the permanent magnet 40 may be moved in a reciprocating manner by the actuator 35. Alternatively, an electromagnet having a coil may be used instead of the permanent magnet 40. In this case, a mechanism of moving the MCM heat exchangers 10 and 20 or the magnet is not necessary. Further, when the electromagnet having the coil is used, the magnitude of the magnetic field applied to the wires 12 and 22 may be changed instead of applying/removing of the magnetic field with respect to the wires 12 and 22 of the MCM heat exchangers 10 and 20.

The switching valve 90 is provided at the first high temperature side pipe 83 and the second high temperature side pipe 84. In synchronization with the operation of the piston 30, the switching valve 90 can switch the liquid medium supply destination of the pump 70 to the first MCM heat exchanger 10 or the second MCM heat exchanger 20 and switch the connection destination of the high temperature side heat exchanger 60 to the second MCM heat exchanger 20 or the first MCM heat exchanger 10.

Next, an operation of the magnetic heat pump device 1 of this embodiment will be described with reference to Figs. 1 and 2.

First, when the piston 30 is moved to the "first position" shown in Fig. 1, the wire 12 of the first MCM heat exchanger 10 is demagnetized so that the temperature falls, and the wire 22 of the second MCM heat exchanger 20 is magnetized so that the temperature rises.

At the same time, a first path (the pump 70 → the first high temperature side pipe 83 → the first MCM heat exchanger 10 → the first low temperature side pipe 81 → the low temperature side heat exchanger 50 → the second low temperature side pipe 82 → the second MCM heat exchanger 20 → the second high temperature side pipe 84 → the high temperature side heat exchanger 60 → the pump 70) is formed by the switching valve 90.

For this reason, the liquid medium is cooled by the wire 12 of the first MCM heat exchanger 10 of which a temperature decreases due to a demagnetization, and the liquid medium is supplied to the low temperature side heat exchanger 50 so that the low temperature side heat exchanger 50 is cooled.

At this time, since the liquid medium passes through the passage 111 formed between the side surfaces of the wires 12 inside the first MCM heat exchanger 10 so as to contact the wires 12, the liquid medium is cooled by the wires 12. Further, since a gap between the outer periphery of the assembly 11 and the tubular portion 14 is blocked by the filling portion 15 of the cover layer 13, the amount of the liquid medium flowing through the passage 111 between the wires 12 does not decrease.

In addition, in a case where the assembly 11B is formed by twisting the plurality of wires 12B (see Figs. 5 and 6), the plurality of wires 12B are held by each other. For this reason, it is possible to suppress a problem in which the wire 12B is moved by an outward pressing force or a friction force caused by the liquid medium.

Meanwhile, the liquid medium is heated by the wire 22 of the second MCM heat exchanger 20 of which a temperature increases due to a magnetization, and the liquid medium is supplied to the high temperature side heat exchanger 60 so that the high temperature side heat exchanger 60 is heated.

At this time, since the liquid medium passes through the passage formed between the side surfaces of the wires 22 inside the second MCM heat exchanger 20 so as to contact the wires 22, the liquid medium is heated by the wires 22. Further, since a gap between the outer periphery of the assembly 21 and the tubular portion of the cover layer 23 is blocked by the filling portion of the cover layer 23, the amount of the liquid medium flowing through the passage formed between the wires 22 does not decrease.

In addition, in a case where the assembly of the second MCM heat exchanger is formed by twisting the plurality of wires, the plurality of wires are held by each other. For this reason, it is possible to suppress a problem in which the wire is moved by an outward pressing force or a friction force caused by the liquid medium.

Next, when the piston 30 is moved to the "second position" shown in Fig. 2, the wire 12 of the first MCM heat exchanger 10 is magnetized so that its temperature rises, and the wire 22 of the second MCM heat exchanger 20 is demagnetized so that its temperature falls.

At the same time, a second path (the pump 70 → the second high temperature side pipe 84 → the second MCM heat exchanger 20 → the second low temperature side pipe 82 → the low temperature side heat exchanger 50 → the first low temperature side pipe 81 → the first MCM heat exchanger 10 → the first high temperature side pipe 83 → the high temperature side heat exchanger 60 → the pump 70) is formed by the switching valve 90.

For this reason, the liquid medium is cooled by the wire 22 of the second MCM heat exchanger 20 of which a temperature decreases due to a demagnetization, and the liquid medium is supplied to the low temperature side heat exchanger 50 so that the low temperature side heat exchanger 50 is cooled.

At this time, since the liquid medium passes through the passage formed between the side surfaces of the wires 22 inside the second MCM heat exchanger 20 so as to contact the wires 22, the liquid medium is cooled by the wire 22. Further, since a gap between the outer periphery of the assembly 21 and the tubular portion of the cover layer 23 is blocked by the filling portion of the cover layer 23, the amount of the liquid medium flowing through the passage between the wires 22 does not decrease.

In addition, in a case where the assembly of the second MCM heat exchanger is formed by twisting the plurality of wires, the plurality of wires are held by each other. For this reason, it is possible to suppress a problem in which the wire is moved by an outward pressing force or a friction force caused by the liquid medium.

Meanwhile, the liquid medium is heated by the wire 12 of the first MCM heat exchanger 10 of which a temperature increases due to a magnetization, and the liquid medium is supplied to the high temperature side heat exchanger 60 so that the high temperature side heat exchanger 60 is heated.

At this time, since the liquid medium passes through the passage 111 formed between the side surfaces of the wires 12 inside the first MCM heat exchanger 10 so as to contact the wires 12, the liquid medium is heated by the wires 12. Further, since a gap between the outer periphery of the assembly 11 and the tubular portion 14 is blocked by the filling portion 15 of the cover layer 13, the amount of the liquid medium flowing through the passage 111 formed between the wires 12 does not decrease.

In addition, in a case where the assembly 11B is formed by twisting the plurality of wires 12B (see Figs. 5 and 6), the plurality of wires 12B are held by each other. For this reason, it is possible to suppress a problem in which the wire 12B is moved by an outward pressing force or a friction force caused by the liquid medium.

Then, when applying and removing of the magnetic field with respect to the wires 12 and 22 inside the first and second MCM heat exchangers 10 and 20 are repeated by the repeated reciprocating movement of the piston 30 between the "first position" and the "second position", the cooling of the low temperature side heat exchanger 50 and the heating of the high temperature side heat exchanger 60 are continued.

As described above, in this embodiment, in the first MCM heat exchanger 10, a gap between the outer periphery of the assembly 11 and the tubular portion 14 is blocked by the filling portion 15 of the cover layer 13. Accordingly, since a large amount of the liquid medium can pass through the passage 111 formed between the wires 12, a heat exchange efficiency can be improved.

Similarly, a gap between the outer periphery of the assembly 21 and the tubular portion in the second MCM heat exchanger 20 is blocked by the filling portion of the cover layer. Accordingly, since a large amount of the liquid medium can pass through the passage formed between the wires 22, it is possible to improve a heat exchange efficiency.

Further, in this embodiment, since the cover layer 13 includes the first and second openings 131 and 132 and a direction from the first opening 131 to the second opening 132 substantially matches the extending direction of the assembly 11, it is possible to suppress an increase in pressure loss of the liquid medium flowing inside the MCM heat exchanger 10.

Further, as shown in Figs. 5 and 6, in a case where the assembly 11B is formed by twisting the plurality of wires 12B, the following effect is obtained. That is, since the plurality of wires 12B are held by each other, it is possible to suppress the wires 12B from being moved by the fluid pressure of the liquid medium and thus to suppress a deterioration in heat exchange efficiency of the MCM heat exchanger.

That is, when the position of the wire accommodated in the MCM heat exchanger is deviated from the position of the permanent magnet, the wire 12B cannot easily radiate and absorb heat. As a result, there is a concern that a heat exchange efficiency between the wire and the liquid medium may be deteriorated. On the contrary, in this embodiment, it is possible to suppress a deterioration in thermal energy exchange efficiency of the MCM heat exchanger.

In particular, when the assembly 11B formed by twisting the plurality of wires 12B is covered by the cover layer 13, the wires 12B located at the outermost periphery is strongly fixed to the filling portion 15 of the cover layer 13. For this reason, since one outside wire among the adjacent wires 12B sequentially supports the other inside wire, the whole assembly 11B is finally held by the cover layer 13. Accordingly, it is possible to suppress the wire 12B from being further moved by the fluid pressure of the liquid medium and to further suppress a deterioration in heat exchange efficiency of the heat exchanger.

Further, since the plurality of wires 12B are twisted by concentric twisting, collective twisting, or composite twisting, it is possible to twist the wires 12B while preventing the crushing of the passage 111B.

Further, since Equations (3) and (4) are satisfied, it is possible to twist the wires 12B while further preventing the crushing of the passage 111B.

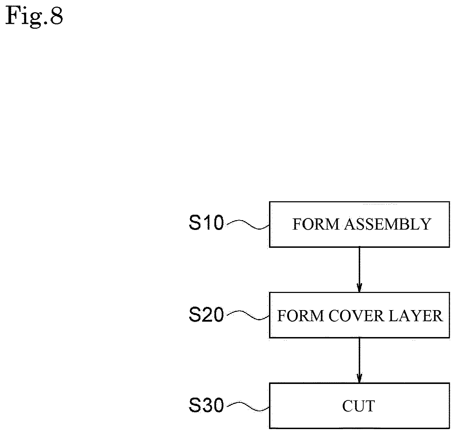

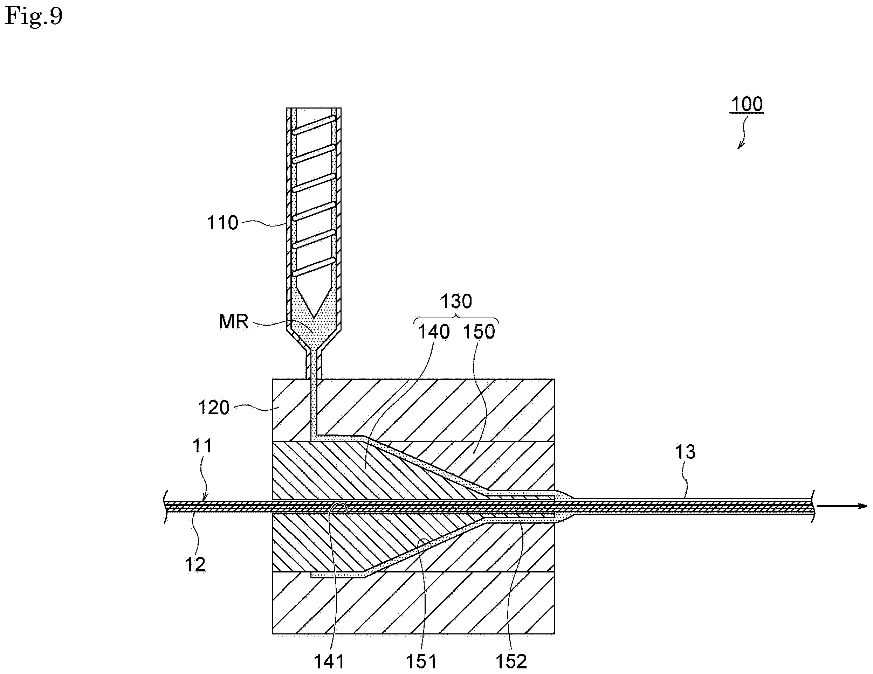

Hereinafter, a manufacturing method of the heat exchanger of this embodiment will be described with reference to Figs. 8 and 9.

Fig. 8 is a process diagram showing a manufacturing method of an MCM heat exchanger of this embodiment, and Fig. 9 is a cross-sectional view showing a resin extrusion covering device used in step S20 of Fig. 8.

Since the first MCM heat exchanger 10 and the second MCM heat exchanger 20 have the same structure, only a method of manufacturing the first MCM heat exchanger 10 will be described, and a method of manufacturing the second MCM heat exchanger 20 will be omitted.

First, in step S10 of Fig. 8, the assembly 11 is formed by bundling the plurality of wires 12.

Specifically, the wire 12 is formed in such a manner that a powdered MCM is inserted into a mold and sintered to be formed into a cylindrical member and the cylindrical member is linearly stretched. A method of forming the wire 12 is not particularly limited to the above-described method. For example, the wire 12 may be formed in such a manner that a casted material is formed into a cylindrical member and the cylindrical member is linearly stretched.

Next, the assembly 11 is formed by bundling the plurality of wires 12. At this time, the plurality of wires 12 are bundled in a direction intersecting the longitudinal direction of the wire 12. The plurality of wires 12 constituting the assembly 11 are simply bundled and are not fixed to each other by an adhesive or the like.

Next, in step S20 of Fig. 8, the assembly 11 is covered by the cover layer 13 using a resin extrusion covering device 100 shown in Fig. 9.

A mold 130 including a nipple 140 and a die 150 is attached to a crosshead 120 of the resin extrusion covering device 100. The nipple 140 includes an insertion hole 141 through which the assembly 11 passes. Further, the nipple 140 is disposed inside an insertion hole 151 of the die 150, and a passage 152 through which a melted resin MR passes is formed between the nipple 140 and the die 150.

The melted resin MR which is heated and kneaded by the extrusion device 110 is supplied to the crosshead 120. Then, the assembly 11 passes through the insertion hole 141 of the nipple 140 and the melted resin MR passes through the passage 152 so that the melted resin is extruded so as to cover the outer periphery of the assembly 11. Then, the melted resin MR is cooled right after the extrusion so that the cover layer 13 is formed. Air cooling or water cooling may be used as a method of cooling the melted resin MR.

Since the melted resin MR surrounds the outer periphery of the assembly 11 when the resin is extruded, the tubular portion 14 of the cover layer 13 is formed. At the same time, since the melted resin MR adheres to the wires 12a located at the outermost periphery of the assembly 11, the filling portion 15 of the cover layer 13 is formed.

Next, in step S30 of Fig. 8, the assembly 11 covered by the cover layer 13 is cut into a predetermined length. Next, one end of the cover layer 13 is connected to the first low temperature side pipe 81 by the first adapter 16, and the other end of the cover layer 13 is connected to the first high temperature side pipe 83 by the second adapter 17. Accordingly, the first MCM heat exchanger 10 is completed. In a case where the wires 12 have a predetermined length in advance, a cutting process in step S30 is not necessary.

As described above, in this embodiment, the cover layer 13 is formed by extrusion molding a resin material on the outer periphery of the assembly 11 in the same manner as the covered wire having the twisted wire and the cover layer. For this reason, a gap between the outermost wire 12a and the tubular portion 14 of the cover layer 13 can be easily filled with the filling portion 15.

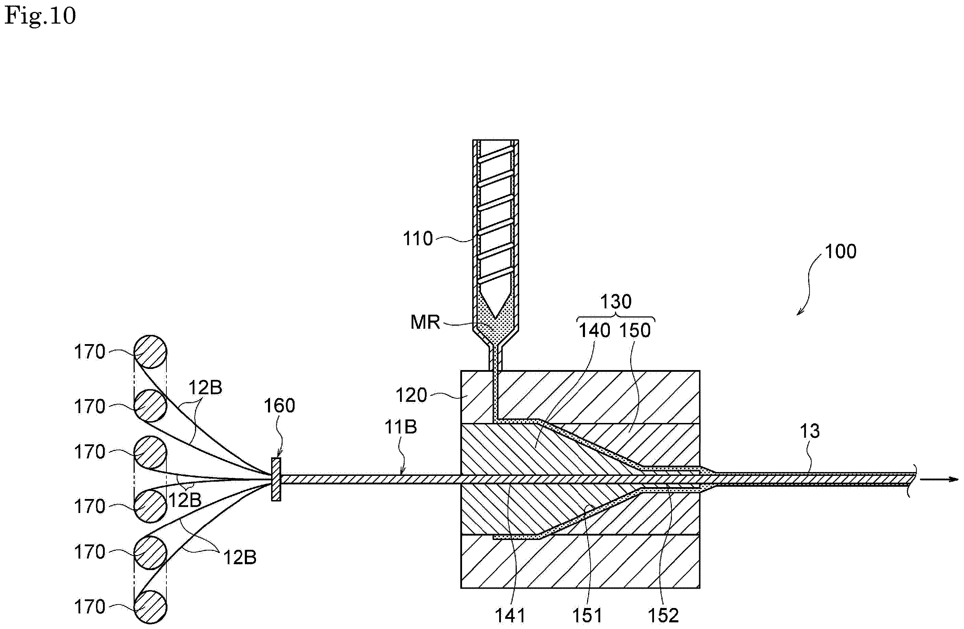

In step S10 of Fig. 8, the assembly 11B shown in Figs. 5 and 6 may be formed by twisting the plurality of wires 12B as below. Fig. 10 is a cross-sectional view showing a twisting device used at the time of manufacturing the MCM heat exchanger shown in Fig. 5.

Specifically, the plurality of prepared wires 12B are bundled in a direction intersecting the longitudinal direction of the wire 12B. Then, the plurality of bundled wires 12B are twisted. Although there are various twisting methods as described above, a known twisting method may be used at the time of twisting the plurality of wires 12B.

For example, a twisting device 160 which twists the wires 12B delivered from a plurality of delivery bobbins 170 having the wires 12B wound thereon shown in Fig. 10 may be used. The twisting device 160 is disposed on the upstream side of the resin extrusion covering device 100. Then, the twisting device 160 includes a twisting control plate (not shown) having a plurality of insertion holes (not shown) and can form the assembly 11B in which the plurality of wires 12B are twisted by rotating the twisting control plate in a predetermined twisting direction while passing the wires 12B delivered from the delivery bobbins 170 through the plurality of insertion holes.

Embodiments heretofore explained are described to facilitate understanding of the present invention and are not described to limit the present invention. It is therefore intended that the elements disclosed in the above embodiments include all design changes and equivalents to fall within the technical scope of the present invention.

The configuration of the above-described magnetic heat pump device is an example, and the heat exchanger according to the invention may be applied to another magnetic heat pump device of an AMR (Active Magnetic Refrigeration) type.

For example, the magnetic heat pump device may include one MCM heat exchanger, a magnetic field changer configured to apply a magnetic field to the MCM and change the magnitude of the magnetic field, first and second external heat exchangers which are respectively connected to the MCM heat exchanger through a pipe, and a fluid supplier configured to supply a fluid from the MCM heat exchanger to the first or second external heat exchangers in synchronization with the operation of the magnetic field changer.

Further, in the above-described embodiment, an example in which the magnetic heat pump device is applied to the air conditioner for home or an automobile has been described, but the invention is not particularly limited thereto. For example, when an MCM having an appropriate Curie temperature according to the application is selected, the magnetic heat pump device according to the invention may be used for an application in an extremely low temperature range such as a refrigerator or in a high temperature range to some extent.

Further, in this embodiment, the first and second MCM heat exchangers 10 and 20 have the same configurations, but the invention is not particularly limited thereto. Here, the heat exchangers may have different configurations. For example, the first and second MCM heat exchangers 10 and 20 may use wires having different wire diameters. Further, the twisting methods, the twisting directions, or the twisting pitches of the plurality of wires may be different from each other.

Further, in this embodiment, the MCM heat exchanger includes a single assembly, but the invention is not particularly limited thereto. For example, a plurality of assemblies may be arranged in series along the extending direction of the MCM heat exchanger. In this case, the plurality of assemblies may have the same configurations or different configurations.

When the magnetic heat pump device is continuously used, the MCM heat exchanger has a temperature gradient in which a temperature is high at the connection side to the high temperature side pipe and a temperature is low at the connection side to the low temperature side pipe. For this reason, in the above-described example, the wires constituting the assembly located at the high temperature side among the plurality of assemblies arranged in series are desirably composed of a material having a relatively high Curie point (Curie temperature), and the wires constituting the assembly located at the low temperature side are desirably composed of a material having a relatively low Curie point. In this way, when the wires composed of materials having different Curie points are used in response to the temperature atmosphere in the MCM heat exchanger, the magnetocaloric effect can be exhibited with higher efficiency.

EXPLANATIONS OF LETTERS OR NUMERALS

| | |
|---|---|
| 1: | magnetic heat pump device |
| 10, 10B: | first MCM heat exchanger |
| 11, 11B: | assembly |
| 111, 111B: | passage |
| 12, 12B: | wire |
| 12a: | outermost wire |
| 13: | cover layer |
| 131, 132: | opening |
| 14: | tubular portion |
| 15: | filling portion |
| 16: | first adapter |
| 161: | first connection port |
| 17: | second adapter |
| 171: | second connection port |
| 20: | second MCM heat exchanger |
| 21: | assembly |
| 22: | wire |
| 23: | cover layer |
| 26: | first adapter |
| 261: | first connection port |
| 27: | second adapter |
| 271: | second connection port |
| 30: | piston |
| 35: | actuator |
| 40: | permanent magnet |
| 50: | low temperature side heat exchanger |
| 60: | high temperature side heat exchanger |
| 70: | pump |

81 to 82:    first and second low temperature side pipes
83 to 84:    first and second high temperature side pipes
90:          switching valve
100:         resin extrusion covering device
110:         extruder
120:         crosshead
130:         mold
140:         nipple
141:         insertion hole
150:         die
151:         insertion hole
152:         passage
160:         twisting device
170:         delivery bobbin
MR:          melted resin

**Claims**

1. A heat exchanger (10; 20) to be used in a magnetic heat pump device (1), the heat exchanger comprising:

   an assembly (11, 11B) formed by bundling wires (12, 12B); and
   a cover layer (13) covering the assembly (11, 11B), wherein
   each of the wires (12, 12B) is composed of a magnetocaloric material having a magnetocaloric effect, and
   the cover layer (13) includes a tubular portion (14) surrounding the periphery of the assembly (11, 11B); **characterized in that** the cover layer (13) further includes
   a filling portion (15) filling a gap between the outer periphery of the assembly 811, 11B) and the tubular portion (14).

2. The heat exchanger according to claim 1, wherein
   the tubular portion (14) and the filling portion (15) are integrally formed.

3. The heat exchanger according to claim 1 or 2, wherein
   the cover layer (13) is composed of polyvinyl chloride, polyethylene, crosslinked polyethylene, silicone rubber, or fluororesin.

4. The heat exchanger according to any one of claims 1 to 3, wherein
   the cover layer (13) includes:

   a first opening located (131) at one end; and
   a second opening (132) located at the other end, and
   a direction from the first opening to the second opening substantially matches an extending direction of the assembly (11, 11B).

5. The heat exchanger according to any one of claims 1 to 4, wherein
   the assembly (11, 11B) is formed by twisting the wires (12, 12B).

6. The heat exchanger according to claim 5, wherein
   the wires (12, 12B) are twisted by concentric twisting, collective twisting, or composite twisting.

7. The heat exchanger according to claim 5 or 6, wherein
   following Equations (1) and (2) are satisfied:

$$1.4 \times 10 \leq A \leq 2.25 \times 10^4 \ldots (1)$$

$$A = P/R \dots (2)$$

where, in the Equation (2), P is a twisting pitch of twisting the wires (12, 12B), and R is a wire diameter of the wire.

8. A magnetic heat pump device (1) comprising:

at least one of the heat exchangers (10, 20) according to any one of claims 1 to 7;
a magnetic field changer configured to apply a magnetic field to the magnetocaloric material and change the magnitude of the magnetic field;
first and second external heat exchangers (50, 60) respectively connected to the heat exchanger (10, 20) through a pipe; and
a fluid supplier (70, 90) configured to supply a fluid from the heat exchanger (10, 20) to the first or second external heat exchanger (50, 60) in synchronization with the operation of the magnetic field changer.

9. A manufacturing method of the heat exchanger (10, 20) to be used in a magnetic heat pump device (1), the manufacturing method comprising:

a first step of forming an assembly (11, 11B) by bundling wires (12, 12B); and
a second step of forming a cover layer 813) to cover the assembly (11, 11B), wherein
each of the wires (12, 12B) is composed of a magnetocaloric material having a magnetocaloric effect, and
the cover layer (13) includes a tubular portion (14) surrounding the periphery of the assembly (10, 10B); **characterized in that** the cover layer (13) further includes
a filling portion (15) filling a gap between the outer periphery of the assembly (10, 10B) and the tubular portion (14).

10. The manufacturing method according to claim 9, wherein
the second step includes forming the cover layer (13) by extruding a resin material to the outer periphery of the assembly (10, 10B) while moving the assembly.

11. The manufacturing method according to claim 9 or 10, wherein
the first step includes forming the assembly (10, 10B) by twisting the wires (12, 12B).

12. The manufacturing method according to any one of claims 9 to 11, the manufacturing method comprising a third step of cutting the assembly (10, 10B) covered by the cover (13) layer into a predetermined length.

**Patentansprüche**

1. Wärmetauscher (10; 20) zum Gebrauch in einer magnetischen Wärmepumpenvorrichtung (1), wobei der Wärmetauscher aufweist:

eine Baugruppe (11, 11B), die durch Bündeln von Drähten (12, 12B) gebildet ist; und
eine Deckschicht (13), die die Baugruppe (11, 11B) bedeckt, wobei
jeder der Drähte (12, 12B) aus einem magnetokalorischen Material hergestellt ist, das einen magnetokalorischen Effekt aufweist, und
die Deckschicht (13) einen rohrförmigen Teil (14) aufweist, der den Umfang der Baugruppe (11, 11B) umgibt; **dadurch gekennzeichnet, dass** die Deckschicht (13) weiterhin aufweist
einen Füllteil (15), der eine Lücke zwischen dem äußeren Umfang der Baugruppe (11, 11B) und dem rohrförmigen Teil (14) ausfüllt.

2. Wärmetauscher nach Anspruch 1, bei dem
der rohrförmige Teil (14) und der Füllteil (15) in einem Stück ausgebildet sind.

3. Wärmetauscher nach Anspruch 1 oder 2, bei dem
die Deckschicht (13) aus Polyvinylchlorid, Polyethylen, quervernetztem Polyethylen, Silikongummi oder Fluorokunststoff hergestellt ist.

**4.** Wärmetauscher nach einem der Ansprüche 1 bis 3, bei dem
die Deckschicht (13) aufweist:

eine erste Öffnung (131), die sich an einem Ende befindet; und
eine zweite Öffnung (132), die sich an dem anderen Ende befindet, und
eine Richtung von der ersten Öffnung zu der zweiten Öffnung im wesentlichen mit der Ausdehnungsrichtung der Baugruppe (11, 11B) übereinstimmt.

**5.** Wärmetauscher nach einem der Ansprüche 1 bis 4, bei dem
die Baugruppe (11, 11B) durch Verdrillen der Drähte (12, 12B) gebildet ist.

**6.** Wärmetauscher nach Anspruch 5, bei dem
die Drähte (12, 12B) durch konzentrische Verdrillung, kollektive Verdrillung oder Komposit-Verdrillung verdrillt sind.

**7.** Wärmetauscher nach Anspruch 5 oder 6, bei dem
die folgenden Gleichungen (1) und (2) erfüll sind:

$$1,4 \text{ x } 10 \leq A \leq 2,25 \text{ x } 10^{4} \ldots (1)$$

$$A = P/R \ldots (2)$$

wobei, in Gleichung (2), P eine Verdrillungssteigung beim Verdrillen der Drähte (12, 12B) ist und R ein Drahtdurchmesser des Drahtes.

**8.** Magnetische Wärmepumpenvorrichtung (1), mit:

wenigstens einem der Wärmetauscher (10, 20) nach einem der Ansprüche 1 bis 7;
einem Magnetfeldwechsler, der dazu konfiguriert ist, ein Magnetfeld an das magnetokalorische Material anzulegen und die Stärke des Magnetfelds zu ändern;
erste und zweite äußere Wärmetauscher (50, 60), die jeweils durch eine Leitung mit dem Wärmetauscher (10, 20) verbunden sind; und
einer Fluidzufuhreinrichtung (70, 90), die dazu konfiguriert ist, ein Fluid aus dem Wärmetauscher (10, 20) synchron mit dem Betrieb des Magnetfeldwechslers zu dem ersten oder zweiten Wärmetauscher (50, 60) zuzuführen.

**9.** Verfahren zur Herstellung des Wärmetauschers (10, 20) zum Gebrauch in einer magnetischen Wärmepumpenvorrichtung (1), welches Verfahren umfasst:

einen ersten Schritt der Herstellung einer Baugruppe (11, 11B) durch Bündeln von Drähten (12, 12B); und
einen zweiten Schritt der Bildung einer Deckschicht (13) zum Bedecken der Baugruppe (11, 11B), wobei
jeder der Drähte (12, 12B) aus einem magnetokalorischen Material gebildet ist, das einen magnetokalorischen Effekt aufweist, und
die Deckschicht (13) einen rohrförmigen Teil aufweist, der den Umfang der Baugruppe (10, 10B) umgibt;
**dadurch gekennzeichnet, dass** die Deckschicht (13) weiterhin aufweist:
einen Füllteil (15), der eine Lücke zwischen dem äußeren Umfang der Baugruppe (10, 10B) und dem rohrförmigen Teil (14) ausfüllt.

**10.** Verfahren nach Anspruch 9, bei dem
der zweite Schritt die Herstellung der Deckschicht (13) durch Extrudieren eines Kunststoffmaterials auf dem äußeren Umfang der Baugruppe (10, 10B) umfasst, während die Baugruppe bewegt wird.

**11.** Verfahren nach Anspruch 9 oder 10, bei dem
der erste Schritt die Herstellung der Baugruppe (10, 10B) durch Verdrillen der Drähte (12, 12B) einschließt.

**12.** Verfahren nach einem der Ansprüche 9 bis 11, welches Herstellungsverfahren einen dritten Schritt des Schneidens der mit der Deckschicht (13) bedeckten Baugruppe (10, 10B) auf eine vorgegebene Länge einschließt.

**Revendications**

1.  Echangeur de chaleur (10 ; 20) destiné à être utilisé dans un dispositif de pompe à chaleur magnétique (1), l'échangeur de chaleur comprenant :

    un ensemble (11, 11B) formé par un regroupement de fils (12, 12B) ; et
    une couche de couverture (13) recouvrant l'ensemble (11, 11B), dans lequel :

    chacun des fils (12, 12B) est constitué par un matériau magnétocalorique ayant un effet magnétocalorique, et
    la couche de couverture (13) comprend une partie tubulaire (14) entourant la périphérie de l'ensemble (11, 11B) ; **caractérisé en ce que** la couche de couverture (13) comprend en outre :
    une partie de remplissage (15) remplissant un espace entre la périphérie extérieure de l'ensemble (11, 11B) et la partie tubulaire (14).

2.  Echangeur de chaleur selon la revendication 1, dans lequel :
    la partie tubulaire (14) et la partie de remplissage (15) sont formées d'une seule pièce.

3.  Echangeur de chaleur selon la revendication 1 ou 2, dans lequel :
    la couche de couverture (13) est constituée par du poly(chlorure de vinyle), du polyéthylène, du polyéthylène réticulé, du caoutchouc au silicones, ou une résine fluorée.

4.  Echangeur de chaleur selon l'une quelconque des revendications 1 à 3, dans lequel :
    la couche de couverture (13) comprend :

    une première ouverture (131) située à une extrémité ; et
    une deuxième ouverture (132) située à l'autre extrémité, et
    une direction de la première ouverture à la deuxième ouverture correspondant sensiblement à une direction d'extension de l'ensemble (11, 11B).

5.  Echangeur de chaleur selon l'une quelconque des revendications 1 à 4, dans lequel :
    l'ensemble (11, 11B) est formé par le torsadage des fils (12, 12B).

6.  Echangeur de chaleur selon la revendication 5, dans lequel :
    les fils (12, 12B) sont torsadés par un torsadage concentrique, un torsadage collectif, ou un torsadage composite.

7.  Echangeur de chaleur selon la revendication 5 ou 6, dans lequel :
    les équations (1) et (2) qui suivent sont satisfaites :

$$1,4 \ x \ 10 \le A \le 2,25 \ x \ 10^4 \ ... \ (1)$$

$$A = P/R \ ... \ (2)$$

    dans lesquelles, dans l'équation (2), P est un pas de torsion du torsadage des fils (12, 12B), et R est un diamètre de fil du fil.

8.  Dispositif de pompe à chaleur magnétique (1), comprenant :

    au moins l'un des échangeurs de chaleur (10, 20) selon l'une quelconque des revendications 1 à 7 ;
    un élément de changement de champ magnétique configuré de façon à appliquer un champ magnétique au matériau magnétocalorique et à changer l'amplitude du champ magnétique ;
    des premier et deuxième échangeurs de chaleur extérieurs (50, 60) respectivement reliés à l'échangeur de chaleur (10, 20) par l'intermédiaire d'un tuyau ; et

un élément de délivrance de fluide (70, 90) configuré pour délivrer un fluide de l'échangeur de chaleur (10, 20) au premier ou au deuxième échangeur de chaleur extérieur (50, 60) de façon synchronisé avec le fonctionnement de l'élément de changement de champ magnétique.

9. Procédé de fabrication de l'échangeur de chaleur (10, 20) destiné à être utilisé dans un dispositif de pompe à chaleur magnétique (1), le procédé de fabrication comprenant :

une première étape consistant à former un ensemble (11, 11B) par regroupement de fils (12, 12B) ; et
une deuxième étape consistant à former une couche de couverture (13) pour recouvrir l'ensemble (11, 11B), dans lequel :

chacun des fils (12, 12B) est constitué par un matériau magnétocalorique ayant un effet magnétocalorique, et la couche de couverture (13) comprend une partie tubulaire (14) entourant la périphérie de l'ensemble (10, 10B) ; **caractérisé en ce que** la couche de couverture (13) comprend de plus :
une partie de remplissage (15) remplissant un espace entre la périphérie extérieure de l'ensemble (10, 10B) et la partie tubulaire (14).

10. Procédé de fabrication selon la revendication 9, dans lequel :
la deuxième étape comprend la formation de la couche de couverture (13) par l'extrusion d'un matériau de résine sur la périphérie extérieure de l'ensemble (10, 10B) tout en déplaçant l'ensemble.

11. Procédé de fabrication selon la revendication 9 ou 10, dans lequel :
la première étape comprend la formation de l'ensemble (10, 10B) par le torsadage des fils (12, 12B).

12. Procédé de fabrication selon l'une quelconque des revendications 9 à 11, le procédé de fabrication comprenant une troisième étape, consistant à couper l'ensemble (10, 10B) recouvert par la couche de couverture (13) à une longueur prédéterminée.

Fig.1

Fig.2

Fig.3

Fig.4

Fig.5

Fig.6

EP 3 312 529 B1

EP 3 312 529 B1

Fig.7 (a)

Fig.7 (b)

Fig.8

S10 — | FORM ASSEMBLY |

S20 — | FORM COVER LAYER |

S30 — | CUT |

Fig.9

EP 3 312 529 B1

Fig.10

**EP 3 312 529 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013064588 A